# EUROPÄISCHE PATENTSCHRIFT

(11) **EP 1 255 384 B1**
(45) Veröffentlichungstag und Bekanntmachung des Hinweises auf die Patenterteilung: **24.03.2004**
(21) Anmeldenummer: 01110857.8
(22) Anmeldetag: 04.05.2001
(51) Int. Cl.: H04L 12/64

(54) **Verfahren zur Übertragung von Verbindungskonfigurationen aus dem Telefonnetz in ein Datennetz**
Method to transport connection configuration from the telephone network to a data network
Procédé pour transmettre les configurations de connection du résau téléphonique à un réseau de données

(43) Veröffentlichungstag der Anmeldung: 06.11.2002
(73) Patentinhaber: SIEMENS AKTIENGESELLSCHAFT, 80333 München (DE)
(72) Erfinder: Stademann, Rainer, Dr., 85658 Egmating (DE)

(56) Entgegenhaltungen:
- EP-A- 0 959 593
- WO-A-00/35176

## Beschreibung

Gegeben seien zwei Teilnehmer A und B, die jeweils mit einem Datennetz, z.B. dem Internet, verbunden sind, z.B. über eine Standleitung oder eine Wählverbindung. Teilnehmer A baut eine Telefonverbindung zu Teilnehmer B auf. Im Laufe der Telefonverbindung sollen zusätzlich zu den Sprachinformationen zwischen Teilnehmer A und Teilnehmer B auch Daten, z.B. Multimediadaten, übertragen werden.

Ein Problem besteht darin, ein geeignetes Verfahren zu finden, das es ermöglicht, zusätzlich zur Telefonverbindung zwischen zwei oder mehr Teilnehmern auf Anforderung automatisch eine Datennetzverbindung zwischen diesen Teilnehmern aufzubauen, deren Konfiguration an Änderungen der Konfiguration der Telefonverbindung automatisch angepasst wird.

Ein bekanntes Verfahren ist z.B. im Dokument WO 0 035 176 A beschrieben.

Ein weiteres bekanntes Verfahren besteht darin, dass alle Teilnehmer ihre Datennetz-Adressen (z.B. IP-Adressen) kennen, diese mündlich über die Telefonverbindung austauschen und ihre Datenendeinrichtungen entsprechend konfigurieren. Dies ist jedoch für die Teilnehmer aufwendig und setzt Kenntnisse über die Wirkungsweise des Datennetzes voraus. Eine automatischer Aufbau einer Datennetzverbindung zu einer bestehenden Telefonverbindung ist nicht möglich. Ebenso müssen alle Konfigurationsänderungen manuell vorgenommen werden.

Ein anderes bekanntes Verfahren nutzt die Möglichkeit, dass sich die Teilnehmer bei einem zentralen Server im Datennetz registrieren, wobei dort ein (Phantasie-)Name der Teilnehmer mit deren Datennetz-Adresse verknüpft wird. Eine Datennetzverbindung kann dann über die (Phantasie-)Namen der Teilnehmer aufgebaut werden. Auch dieses Verfahren kann nicht automatisch zusätzlich zu einer bestehenden Telefonverbindung eine Datennetzverbindung herstellen oder die Konfiguration der Datennetzverbindung an eine geänderte Konfiguration der Telefonverbindung anpassen.

Bei einem weiteren bekannten Verfahren werden die Telefoneinrichtungen und die Datenendeinrichtungen der Teilnehmer miteinander verbunden, und die Datenendeinrichtung überträgt beim Aufbau der Datennetzverbindung die Telefonnummer der angeschlossenen Telefoneinrichtung zusammen mit der Datennetz-Adresse der Datenendeinrichtung an eine zentrale Datenbank. Wird eine Datennetzverbindung zusätzlich zur Telefonverbindung benötigt, übermittelt die Telefoneinrichtung zunächst die Rufnummer des anderen Teilnehmers an die Datenendeinrichtung. Von der Datenendeinrichtung kann die erforderliche Datennetz-Adresse der zentralen Datenbank entnommen werden. Von Nachteil ist dabei die zwischen Telefoneinrichtung und Datenendeinrichtung erforderliche Verbindung, darüber hinaus kann durch dieses Verfahren bei Anrufweiterleitung, Anrufweitergabe, Konferenzschaltung und anderen Änderungen der Konfiguration der Telefonverbindung die Datenverbindung oft nicht (z.B. wenn es sich um keine ISDN Verbindungen handelt) automatisch angepasst werden.

Die der vorliegenden Erfindung zugrundeliegende Aufgabe besteht darin, die Effizienz und die Nutzerfreundlichkeit der bisher bekannten Verfahren zur Übertragung von Verbindungskonfigurationen aus dem Telefonnetz in ein Datennetz zu verbessern.

Die Aufgabe wird ausgehend von den Verfahren zur Übertragung von Verbindungskonfigurationen aus dem Telefonnetz in ein Datennetz gemäß den Merkmalen des Oberbegriffs des Patentanspruchs 1 durch dessen kennzeichnende Merkmale gelöst.

Die Erfindung sieht auch eine Servereinrichtung gemäß Anspruch 6 vor, die diese Aufgabe löst.

Ein wesentlicher Aspekt des erfindungsgemäßen Verfahrens ist die Tatsache, dass durch einen vom Telefonnetzbetreiber zur Verfügung gestellten Dienst und ein entsprechendes Verfahren, das auf den Datenendeinrichtungen der Teilnehmer abläuft, automatisch alle Datennetz-Adressen aller an einer Verbindung beteiligten Teilnehmer sowie die Verbindungskonfiguration der Telefonverbindung auf die Datenendeinrichtungen der Teilnehmer übertragen werden. Dies hat den Vorteil, dass eine Datennetz-Verbindung auf Teilnehmer-Anforderung automatisch entsprechend der Telefonverbindung aufgebaut werden kann, ohne dass der Teilnehmer irgendeine der beteiligten Datennetz-Adressen kennen muss. Zwischen den Datenendeinrichtungen und den Telefoneinrichtungen ist dazu keine Verbindung erforderlich. Bei Anrufweiterleitung, Anrufweitergabe, Konferenzschaltung und anderen Änderungen der Konfiguration der Telefonverbindung kann die Datennetzverbindung automatisch angepasst werden.

Weitere vorteilhafte Ausgestaltungen der Erfindung sind den Unteransprüchen zu entnehmen.

Im folgenden wird das erfindungsgemäße Verfahren anhand einer Zeichnung näher erläutert.

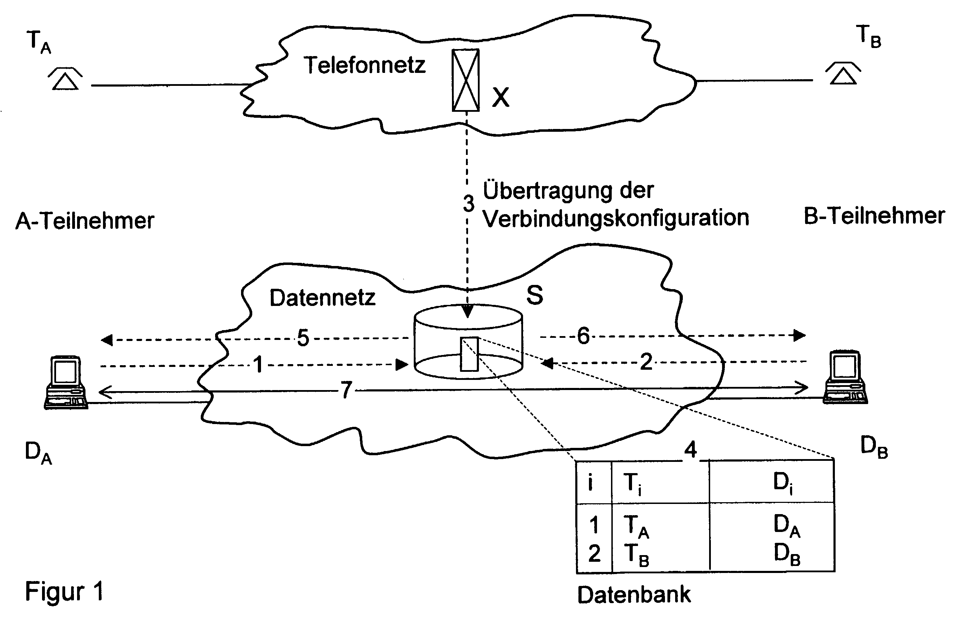

Die Figur zeigt zwei sowohl an ein Telefon- als auch an ein Datennetz angeschlossene Teilnehmer A und B. Der Telefonnetzbetreiber aktiviert für einen ersten Teilnehmer A mit Telefonnummer T_{A} und einen zweiten Teilnehmer B mit Telefonnummer T_{B} in einer Vermittlungsstelle X den Dienst und stellt den beiden Teilnehmern A, B eine Software zur Benutzung auf deren PCs zur Verfügung. Durch diese Software werden nach Herstellung der Verbindung der PCs mit dem Internet die aktuellen IP-Adressen D_{A}, D_{B} zusammen mit den Telefonnummern T_{A}, T_{B} an den Server S übertragen - dieser Vorgang ist in der Figur mit 1 und 2 bezeichnet. Im Server S wird eine Datenbank erzeugt, die die Zuordnung von Telefonnummer zu IP-Adresse enthält.

Wenn Teilnehmer A eine Verbindung zu Teilnehmer B aufbaut, werden von der Vermittlungsstelle X im Telefonnetz die Verbindungsdaten der Telefonverbindung an den Server S übertragen - dieser Vorgang ist in der Figur mit 3 bezeichnet. Durch den Server S werden anhand der Datenbank die zu dieser Telefonverbindung gehörigen IP-Adressen D_{A}, D_{B} ermittelt - Vorgang 4 in der Figur - und zusammen mit der Verbindungskonfiguration an die Software auf den PCs der an der Verbindung beteiligten Teilnehmer A, B übertragen - Vorgänge 5 und 6. Auf Anforderung eines der beiden Teilnehmer A, B kann durch die Software auf den PCs jederzeit eine direkte Verbindung zwischen den PCs hergestellt werden, beispielsweise indem einer der Teilnehmer A, B eine entsprechende Funktion an seiner Telefoneinrichtung oder seinem Datenendgerät aktiviert - Vorgang 7.

## Patentansprüche

1. Verfahren zur Übertragung von Verbindungskonfigurationen aus dem Telefonnetz in ein Datennetz, wobei zu einer bestehenden Telefonverbindung zwischen mindestens zwei Teilnehmern (A, B) zusätzlich eine Datennetzverbindung aufgebaut wird,
**dadurch gekennzeichnet,**
- **dass** eine Datennetz-Adresse (D_{A}, D_{B}) der Datenendeinrichtung eines jeden Teilnehmers (A, B) automatisch durch einen oder mehrere zentrale Server (S) zusammen mit der Telefonnummer (T_{A}, T_{B}) des Teilnehmers (A, B) gespeichert wird,
- **dass** der Datenendeinrichtung eines Teilnehmers (A, B) die Datennetz-Adresse (D_{A}, D_{B}) der Datenendeinrichtung eines anderen Teilnehmers (A, B) sowie die Konfiguration der Verbindung im Telefonnetz automatisch durch den oder die Server (S) mitgeteilt wird, wenn eine Telefonverbindung zwischen den Teilnehmern (A, B) besteht,
- **dass** bei Änderungen der Konfiguration der Telefonverbindung die neue Konfiguration automatisch an die Datenendeinrichtungen übertragen wird.

2. Verfahren nach Anspruch 1,
**dadurch gekennzeichnet,**
- **dass** das Datennetz das Internet ist,
- **dass** die Datennetz-Adressen (D_{A}, D_{B}) der Datenendeinrichtungen IP Adressen sind.

3. Verfahren nach einem der Ansprüche 1 oder 2,
**dadurch gekennzeichnet,**
**dass** ein entsprechendes Dienstmerkmal von einer Vermittlungsstelle (X) des Telefonnetzes gesteuert wird.

4. Verfahren nach einem der Ansprüche 1 oder 2,
**dadurch gekennzeichnet,**
**dass** ein entsprechendes Dienstmerkmal von einem Server des Datennetzes (S) gesteuert wird.

5. Verfahren nach einem der Ansprüche 1 oder 2,
**dadurch gekennzeichnet,**
- **dass** bei Verwendung mehrerer zentraler Server (S) die Teilnehmer (A, B) anhand ihrer Rufnummer (T_{A}, T_{B}) im Telefonnetz nach einem vorgegebenen Schema den einzelnen Servern (S) zugewiesen werden,
- **dass** der dem die Datennetzverbindung anfordernden Teilnehmer (A, B) zugeordnete Server (S) die Steuerung der Datennetzverbindung übernimmt.

6. Servereinrichtung (S) in einem Datennetz mit einer Datenbank, in der für jeden Teilnehmer (A, B) zu einer Datennetz-Adresse (D_{A}, D_{B}) eine Telefonnummer (T_{A}, T_{B}) des Teilnehmers (A, B) gespeichert werden kann,
**dadurch gekennzeichnet,**
- **dass** die Servereinrichtung automatisch von den Datenendeinrichtungen aller Teilnehmer (A, B) Datennetz-Adresse (D_{A}, D_{B}) und Telefonnummer (T_{A}, T_{B}) erhält,
- **dass** die Servereinrichtung von einer Vermittlungsstelle (X) des Telefonnetzes die Konfiguration einer Telefonverbindung erhält,
- **dass** die Servereinrichtung der Datenendeinrichtung eines Teilnehmers (A, B) die Datennetz-Adresse (D_{A}, D_{B}) der Datenendeinrichtung eines anderen Teilnehmers (A, B) sowie die Konfiguration der Verbindung im Telefonnetz automatisch mitteilt, wenn eine Telefonverbindung zwischen den Teilnehmern (A, B) besteht,
- **dass** die Servereinrichtung bei Änderungen der Konfiguration der Telefonverbindung die neue Konfiguration automatisch an die Datenendeinrichtungen überträgt.

## Claims

1. Method for transmitting connection configurations from the telephone network to a data network, with a data network connection additionally being set up for an existing telephone connection between at least two subscribers (A, B),
**characterized**
- **in that** a data network address (D_{A}, D_{B}) for the data terminal of each subscriber (A, B) is automatically stored by one or more central servers (S) together with the telephone number (T_{A}, T_{B}) of the subscriber (A, B),
- **in that** the data terminal of a subscriber (A, B) is automatically notified of the data network address (D_{A}, D_{B}) of the data terminal of another subscriber (A, B) and of the configuration of the connection in the telephone network by the server(s) (S) when there is a telephone connection between the subscribers (A, B),
- **in that** changes in the configuration of the telephone connection involve the new configuration being automatically transmitted to the data terminals.

2. Method according to Claim 1,
**characterized**
- **in that** the data network is the Internet,
- **in that** the data network addresses (D_{A}, D_{B}) of the data terminals are IP addresses.

3. Method according to one of Claims 1 or 2,
**characterized**
**in that** an appropriate service feature is controlled by a switching centre (X) in the telephone network.

4. Method according to one of Claims 1 or 2,
**characterized**
**in that** an appropriate service feature is controlled by a server in the data network (S).

5. Method according to one of Claims 1 or 2,
**characterized**
- **in that**, when a plurality of central servers (S) are used, the call numbers (T_{A}, T_{B}) of the subscribers (A, B) in the telephone network are used to assign said subscribers to the individual servers (S) according to a prescribed scheme,
- **in that** the server (S) associated with the subscriber (A, B) requesting the data network connection undertakes control of the data network connection.

6. Server device (S) in a data network having a database which can store, for each subscriber (A, B), a telephone number (T_{A}, T_{B}) for the subscriber (A, B) in association with a data network address (D_{A}, D_{B}),
**characterized**
- **in that** the server device automatically receives the data network address (D_{A}, D_{B}) and telephone number (T_{A}, T_{B}) from the data terminals of all the subscribers (A, B),
- **in that** the server device receives the configuration of a telephone connection from a switching centre (X) in the telephone network,
- **in that** the server device automatically notifies the data terminal belonging to a subscriber (A, B) of the data network address (D_{A}, D_{B}) of the data terminal belonging to another subscriber (A, B) and of the configuration of the connection in the telephone network when there is a telephone connection between the subscribers (A, B),
- **in that** changes in the configuration of the telephone connection involve the server device automatically transmitting the new configuration to the data terminals.

## Revendications

1. Procédé pour la transmission de configurations de liaison du réseau téléphonique à un réseau de données, dans lequel une liaison au réseau de données est établie en plus d'une liaison téléphonique en cours entre au moins deux abonnés (A, B),
**caractérisé :**
- **en ce qu'**une adresse dans le réseau de données (D_{A}, D_{B}) d'un terminal de données de chacun des abonnés (A, B) est conservée automatiquement en mémoire par un ou plusieurs serveurs centraux (S) en même temps que le numéro de téléphone (T_{A}, T_{B}) de l'abonné (A, B),
- **en ce que** le terminal de données d'un abonné (A, B) reçoit automatiquement par le ou les serveurs (S) l'adresse dans le réseau de données (D_{A}, D_{B}) du terminal de données d'un autre abonné (A, B) ainsi que la configuration de la liaison dans le réseau téléphonique lorsqu'une liaison téléphonique entre des abonnés (A, B) est en cours, et
- **en ce que** la nouvelle configuration est automatiquement transmise aux terminaux de données en cas de modifications de la configuration de la liaison téléphonique.

2. Procédé selon la revendication 1, **caractérisé**
- **en ce que** le réseau de données est l'Internet, et
- **en ce que** les adresses dans le réseau de données (D_{A}, D_{B}) des terminaux de données sont des adresses IP.

3. Procédé selon l'une des revendications 1 ou 2, **caractérisé en ce qu'**une caractéristique de service correspondante est commandée par un central de transmission (X) du réseau téléphonique.

4. Procédé selon l'une des revendications 1 ou 2, **caractérisé en ce qu'**une caractéristique de service correspondante est commandée par un serveur du réseau de données (S).

5. Procédé selon l'une des revendications 1 ou 2, **caractérisé :**
- **en ce qu'**en cas d'utilisation de plusieurs serveurs centraux (S), un schéma prédéterminé des serveurs individuels (S) est attribué aux abonnés (A, B) à l'aide de leur numéro d'appel (T_{A}, T_{B}) dans le réseau téléphonique, et
- **en ce que** le serveur (S) attribué à l'abonné (A, B) qui demande la liaison au réseau de données assure la commande de la liaison au réseau de données.

6. Dispositif serveur (S) dans un réseau de données, présentant une banque de données dans laquelle pour chaque abonné (A,B) un numéro de téléphone (T_{A}, T_{B}) de l'abonné (A, B) peut être conservé en mémoire en association à une adresse dans le réseau de données (D_{A}, D_{B}),
**caractérisé :**
- **en ce que** le dispositif serveur reçoit automatiquement des terminaux de données de tous les abonnés (A, B) les adresses dans le réseau de données (D_{A}, D_{B}) et les numéros de téléphone (T_{A}, T_{B}),
- **en ce que** le dispositif serveur reçoit d'un central de transmission (X) du réseau téléphonique la configuration d'une liaison téléphonique,
- **en ce que** lorsqu'une liaison téléphonique est en cours entre les abonnés (A, B), le dispositif serveur communique automatiquement l'adresse dans le réseau de données (D_{A}, D_{B}) du terminal de données d'un abonné (A, B) ainsi que la configuration de la liaison dans le réseau téléphonique au terminal de données de l'autre abonné (A,B),
- **en ce qu'**en cas de modifications de la configuration de la liaison téléphonique, le dispositif serveur transmet automatiquement la nouvelle configuration aux terminaux de données.
